# EUROPEAN PATENT APPLICATION

(11) **EP 3 705 360 A1**
(43) Date of publication of application: **09.09.2020**
(21) Application number: 18873807.4
(22) Date of filing: 09.02.2018
(51) Int. Cl.: B60S 5/06, B65G 47/54

(54) **BATTERY STORAGE DEVICE AND BATTERY STORAGE AND EXCHANGE SYSTEM**

(30) Priority: 30.10.2017 CN 201711056284
(71) Applicant: NIO Nextev Limited, Central, Hong Kong (HK)
(72) Inventor: MA, Yongyue, Hong Kong (CN); BENGTSSON, Jan, Hong Kong (CN); LI, Nan, Hong Kong (CN); DING, Xikun, Hong Kong (CN)
(74) Representative: Vossius & Partner Patentanwälte Rechtsanwälte mbB
(86) International application number: PCT/CN2018/075992
(87) International publication number: WO 2019/085325

(57) **Abstract**

A battery storage device (1), comprising a main body (11), conveying units (12, 13) in contact with a battery, and a switching unit (14) in the main body (11). The main body (11) has a top potion that accommodates the battery. The conveying units (12, 13) are arranged on the top potion of the main body (11), and each at least comprise a first conveying portion (12) that conveys the battery in a first direction (x), and a second conveying portion (13) that conveys the battery in a second direction (y), with an included angle being formed between the first direction (x) and the second direction (y). The switching unit (14) is associated with the first conveying portion (12) and the second conveying portion (13) so as to selectively control the first conveying portion (12) and the second conveying portion (13) to come into contact with the battery and enables the selected conveying portion to convey the battery. The battery storage device has the functions of simple battery storage, battery charging, manual battery swap, and automatic battery swap. The invention further relates to a battery storage and exchange system comprising at least two battery storage devices described above.

## Description

### Technical Field

The application relates to the field of battery swap services, and in particular to a battery storage device and a battery storage and exchange system.

### Background Art

When a battery pack of an electric vehicle is replaced, storage points of the battery pack need to be rechargeable and exchangeable. Considering the space limitation and the flexibility of battery pack supply, a simple storage platform that can be manually operated is needed. In addition, requirements of satisfying both an automatic battery swap system and a manual battery swap system are considered.

An automatic charging compartment can be used to stack and arrange a large number of battery packs with a high degree of automation and integration, and mainly comprises a power supply system, an automatic transport system, a ventilation system, a water cooling system, etc. However, the automatic charging compartment is large in size and high in operation and maintenance costs, and is applicable to large-scale battery swap places. For small and low-cost battery swap places, space and environmental conditions cannot basically meet the requirements of the automatic charging compartment, and a small (micro) battery pack charging/storage platform having its functions is needed.

### Summary of the Invention

One aspect of the application is to provide a battery storage device, comprising:
a main body having a top potion that accommodates a battery;
conveying units in contact with the battery, the conveying units being arranged on the top potion of the main body and each at least comprising a first conveying portion that conveys the battery in a first direction and a second conveying portion that conveys the battery in a second direction, with an included angle being formed between the first direction and the second direction; and
a switching unit arranged in the main body and associated with the first conveying portion and the second conveying portion, wherein the switching unit selectively controls the first conveying portion and the second conveying portion to come into contact with the battery and enables the selected conveying portion to convey the battery.

In the above battery storage device, one end portion of the main body in the first direction and/or in the second direction is provided with a limiting unit used for limiting a moving position of the battery on the conveying unit.

In the above battery storage device, the limiting unit is a stop portion that is higher than the first conveying portion and the second conveying portion, and is detachably mounted on the main body.

In the above battery storage device, the battery storage device further comprises a docking unit arranged at an end portion of the main body in the first direction or in the second direction, and an external battery transporter is positioned by the battery storage device by means of the docking unit, such that the battery is transferred from the battery transporter to at least one of the first conveying portion and the second conveying portion.

In the above battery storage device, the first conveying portion and the second conveying portion each comprise a plurality of roller arrays, wherein each of roller arrays comprises a plurality of pivoting rollers arranged in a conveying direction of the conveying portion, the roller array of the first conveying portion has a first surface in contact with the battery, the roller array of the second conveying portion has a second surface in contact with the battery, and the switching unit controls at least one of the first conveying portion and the second conveying portion to ascend or descend, such that the first surface is higher than the second surface or the second surface is higher than the first surface.

In the above battery storage device, the roller arrays of the first conveying portion and the roller arrays of the second conveying portion are arranged crosswise at the top potion of the main body.

In the above battery storage device, the battery storage device further comprises a charging connection unit arranged on the main body, and the charging connection unit fixes the battery onto the main body and charges the battery.

In the above battery storage device, the battery storage device further comprises a moving portion for moving the main body, and the moving portion is lockable.

Another aspect of the application is to provide a battery storage and exchange system, comprising at least two battery storage devices described above, the battery storage devices being adjacently arranged in the first direction or in the second direction.

In the above battery storage and exchange system, any one of the battery storage devices is engaged to a battery transporter in the form of a vehicle by means of a docking unit provided in the first direction.

In the above battery storage and exchange system, one of the battery storage devices is provided with a battery transporter in the form of a track rail on one side in the second direction.

The battery storage device according to the application has functions of easy battery storage and battery charging, and can transport a battery in two directions, such as in a longitudinal direction and in a transverse direction. In addition, the battery storage device has a compact structure and a small size, is miniaturized, and reduced costs and complexity. The battery storage device is movable, has high universality and reduces the space occupied by the system.

The battery storage device according to the application also has the characteristic of being modularized to be applicable to small places and places with small battery swap quantity, as well as extensible battery swap services.

The battery storage and exchange system according to the application has functions of manual and automatic storage and exchange of battery packs, implements bidirectional conveying of materials and quick exchange of materials, and also saves on the occupied area.

Other aspects and features of the application will become apparent from the following detailed description with reference to accompanying drawings. However, it should be understood that the accompanying drawings are designed for the purpose of explanation only and are not intended to limit the scope of the application, as they should refer to the appended claims. It should also be understood that the accompanying drawings are only intended to conceptually illustrate the structures and processes described herein and are not necessarily drawn to scale unless otherwise indicated.

### Brief Description of the Drawings

The application will be more fully understood by referring to the following detailed description of specific embodiments in conjunction with the accompanying drawings, in which like reference numerals refer to like elements throughout the figures. In the figures:
Fig. 1 is a schematic structural diagram of a battery storage device according to the application, as is seen from one perspective;
Fig. 2 is a schematic structural diagram of the battery storage device in Fig. 1 with a docking unit, as is seen from another perspective;
Fig. 3 is a schematic diagram of a battery storage and exchange system according to the application;
Fig. 4 is a schematic block diagram of a battery storage and exchange system according to the application;
Fig. 5a to Fig. 5d are schematic diagrams of a manual battery swap process of a battery storage and exchange system according to the application; and
Fig. 6a to Fig. 6e are schematic diagrams of an automatic battery swap process of a battery storage and exchange system according to the application.

### Detailed Description of Embodiments

In order to help those skilled in the art to accurately understand the claimed subject matter of the application, the specific embodiments of the application will be described in detail below with reference to the accompanying drawings.

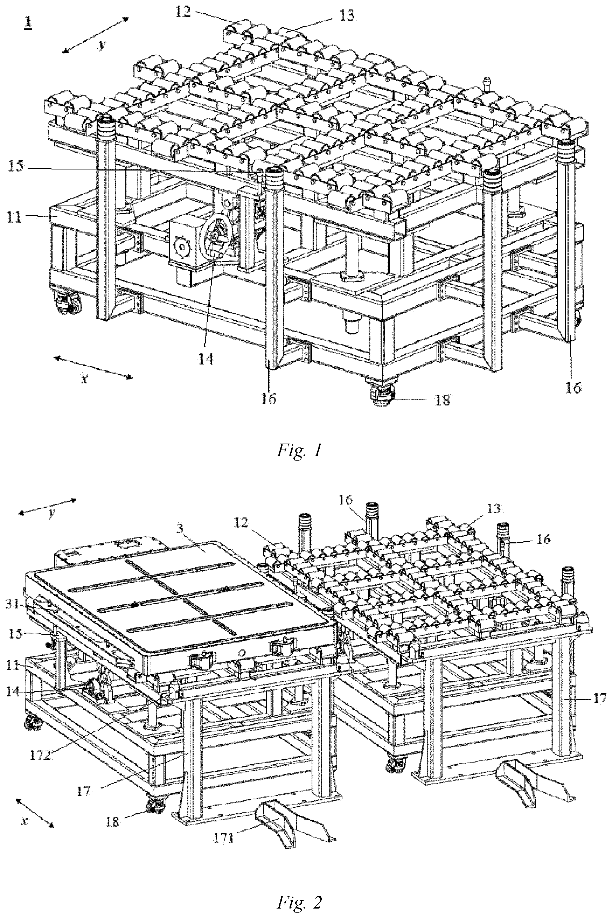

Fig. 1 is a schematic structural diagram of a battery storage device according to the application. As shown in the figure, the battery storage device 1 comprises a main body 11, conveying portions 12 and 13, a switching unit 14, a charging connection unit 15, a limiting unit 16, a docking unit 17 (not shown in the figure), and a moving portion 18. The main body 11 has a frame structure having a first direction x and a second direction y as indicated by arrows in the figure. The top potion of the frame structure is a space that can accommodate a battery. The conveying portions 12 and 13 are arranged in this space. The conveying portion is used for conveying the battery between the battery storage device and other external devices. The conveying portions each at least comprise a first conveying portion 12 and a second conveying portion 13. The first conveying portion 12 conveys the battery in a first direction x, and the second conveying portion 13 conveys the battery in a second direction y. The first conveying portion 12 and the second conveying portion 13 are each formed of a plurality of roller arrays, each of the roller arrays is formed of a plurality of pivoting rollers arranged such that battery conveying surfaces are formed on the surfaces of the roller arrays, which are respectively considered here as a first surface and a second surface. The roller arrays of the first conveying portion 12 extend in the first direction x, so the battery is conveyed in the first direction x on the first surface. The roller arrays of the second conveying portion 13 extend in the second direction y, so the battery is conveyed in the second direction y on the second surface. The first conveying portion 12 and the second conveying portion 13 having conveying directions thereof being arranged in a substantially perpendicularly crossing manner at the top potion of the battery storage device.

The switching unit 14 is used to control the first conveying portion 12 or the second conveying portion 13 to convey the battery. The switching unit 14 is arranged in the main body 11 and is associated with the first conveying portion 12 and the second conveying portion 13 by any methods that would have occurred to those skilled in the art, such as mechanical, electrical and communication methods. The switching unit 14 can select the conveying direction of the battery by controlling the heights of the first conveying portion 12 and the second conveying portion 13. When the switching unit 14 controls the first surface to be higher than the second surface, the battery is conveyed on the first conveying portion 12; and when the switching unit 14 controls the second surface to be higher than the first surface, the battery is conveyed on the second conveying portion 13.

After the battery is transferred from an external device to the battery storage device, the battery can be charged by the charging connection unit 15. The charging connection unit 15 provides safe charging for the battery. The charging connection unit 15 comprises a connecting portion that fixes the battery and a charging portion that charges the battery. The connecting portion is a pin mechanism shown in the figure. Referring to Fig. 2, a battery 3 is provided with a pin hole 31 so that the battery can be fixed on the battery storage device by means of a pin. The charging portion is connected to a charging port of the battery.

The limiting unit 16 helps the battery to be conveyed in place on the battery storage device. The limiting unit is arranged at one end of the main body 11 in at least one of the first direction x and the second direction y. When the battery moves to a predetermined position, the limiting unit 16 can mechanically prevent the battery from continuing to move or can sense the position of the battery to send a signal on conveying the battery in place. As shown in the figure, but not limited, the limiting unit 16 is a stop portion that extends from the frame structure of the main body 11 and is higher than the first surface of the first conveying portion 12 and the second surface of the second conveying portion 13. The stop portion can be arranged, in the form of a plurality of columns as shown in the figure, on one side of the main body 11. In the illustrated embodiment, the stop portions are respectively arranged at one end in the first direction X and in the second direction Y, and are detachable, such the stop portions can be detached from the main body 11 when necessary.

The docking unit 17 (not shown in Fig. 1, referring to Fig. 2) is arranged opposite the limiting unit 16 on one side thereof, and the main body 11 is docked with an external device by means of the docking unit 17. The external device is a battery transporter for transporting batteries, and may be a battery transfer trolley that travels between a battery swap region and the battery storage device. The docking unit 17 at least comprises a guide portion 171 and a connecting portion 172. It would have occurred to those skilled in the art that the battery transfer trolley is provided with corresponding guide portions (such as support legs) and connecting portions. The guide portion of the battery transfer trolley firstly enters the guide portion 171 of the docking unit, and then the connecting portion of the battery transfer trolley is fitted or connected to the connecting portion 172 of the docking unit. After the docking is completed, the battery can be transferred from the battery transfer trolley to the battery storage device. The docking unit can also be fixed to the ground, which can be either independent of the main body as shown in Fig. 2 or a part extended out of the main body structure.

The bottom of the main body of the battery storage device is further provided with a moving portion 18 in the form of a wheel. The battery storage device can move when needed or fixed by locking.

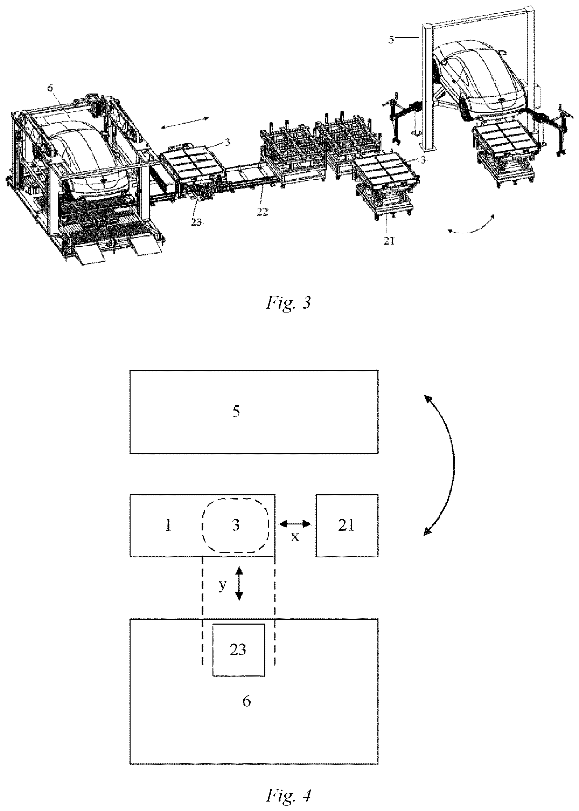

Figs. 2-4 are schematic diagrams of a battery storage and exchange system. In this system, at least two battery storage devices are adjacently arranged side by side in a first direction x or in a second direction y as shown in the figure. As can be seen from Fig. 2, two battery storage devices are arranged side by side in the second direction y, and the battery can move on any one of the battery storage devices in the first direction x, or move from one of the battery storage devices to the other one in the second direction y. The docking unit 17 is arranged at an end portion of the battery storage device in the first direction x, and the battery storage device is engaged with a battery transporter in the form of a first trolley 21 by means of the docking unit 17. Referring to Figs. 3-4, in the case of manual battery swap, the first trolley 21 travels between the battery storage device and a manual battery swap region 5. After the first trolley 21 comes to the front of the battery storage device and is positioned, the battery can be transferred to the battery storage device in the first direction x, and the battery can also be transferred between the two battery storage devices in the second direction y. The battery transporter may also be a track rail 22, and the track rail extends outward from the bottom of one of the battery storage devices in the second direction y, which is frequently used in the case of automatic battery swap. Other battery swap devices that travel between an automatic battery swap region 6 and the battery storage device, such as a second trolley 23 shown in the figure, walk on the track rail 22. When the second trolley 23 reaches the vicinity of the battery storage device, the battery can be transferred to the battery storage device in the second direction y. The first trolley 21 can receive the battery in the first direction x to help the battery to be charged and the charged battery to be exchanged between the two battery storage devices.

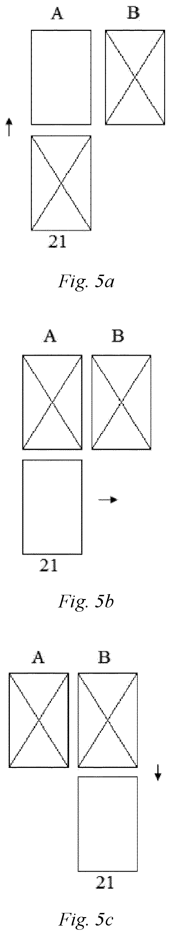

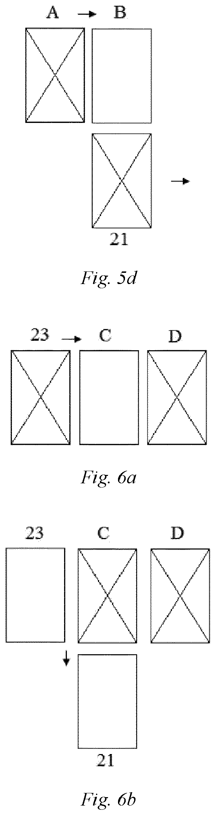

Next, the steps of manual battery swap and automatic battery swap are introduced respectively. In the case of manual battery swap, referring to Figs. 5a-d, battery storage devices A and B of the application are arranged side by side, wherein there is a charged battery (the battery is indicated by "X") on the battery storage device B. The first trolley 21 moves to the front of the battery storage device A and pushes the battery to be charged onto the battery storage device A by manpower or other assistance. Then the first trolley 21 moves to the front of the battery storage device B, and the charged battery is pushed from the battery storage device B onto the first trolley 21. The first trolley 21 leaves. The battery to be charged is pushed from the battery storage device A to the battery storage device B to be charged and waits for the next battery swap.

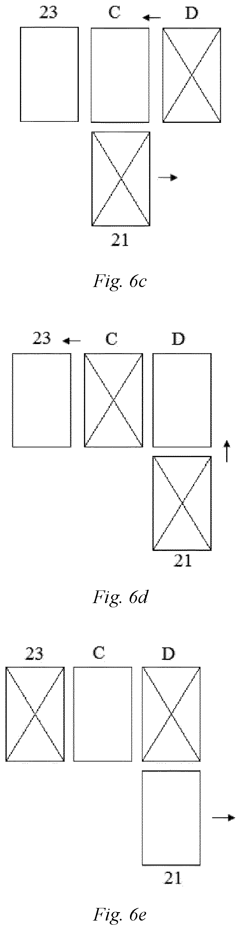

Referring to Figs. 6a-e, in the case of automatic battery swap, both a track rail and an automatic battery swap trolley are required. Battery storage devices C and D of the application are arranged side by side, wherein there is a charged battery on the battery storage device D. The battery to be charged is moved to one side of the battery storage device C by the second trolley 23 and transferred from the second trolley 23 to the battery storage device C. In this case, the first trolley 21 moves to the front of the battery storage device C, and the battery to be charged is moved from the battery storage device C to the first trolley 21, and the first trolley 21 temporarily receives the battery to be charged. Subsequently, the battery storage device D transfers the charged battery to the battery storage device C and then transfers the battery from the battery storage device C to the second trolley 23 for sending along the track rail for battery swap. The first trolley 21 carries the battery to be charged to the front of the battery storage device D, transfers the battery to be charged to the battery storage device D for charging, and waits for the next charging.

Although specific embodiments of the application have been shown and described in detail to illustrate the principles of the application, it should be understood that the application may be implemented in other ways without departing from such principles.

## Claims

1. A battery storage device, **characterized by** comprising:
a main body (11), the main body (11) having a top potion that accommodates a battery;
conveying units (12, 13) in contact with the battery, the conveying units being arranged on the top potion of the main body (11) and each at least comprising a first conveying portion (12) that conveys the battery in a first direction (x) and a second conveying portion (13) that conveys the battery in a second direction (y), with an included angle being formed between the first direction (x) and the second direction (y); and
a switching unit (14) arranged in the main body (11) and associated with the first conveying portion (12) and the second conveying portion (13), wherein the switching unit (14) selectively controls the first conveying portion (12) and the second conveying portion (13) to come into contact with the battery and enables the selected conveying portion to convey the battery.

2. The battery storage device according to claim 1, **characterized in that** one end portion of the main body (11) in the first direction (x) and/or in the second direction (y) is provided with a limiting unit (16) used for limiting a moving position of the battery on the conveying unit.

3. The battery storage device according to claim 2, **characterized in that** the limiting unit (16) is a stop portion that is higher than the first conveying portion (12) and the second conveying portion (13), and is detachably mounted on the main body (11).

4. The battery storage device according to claim 1, **characterized in that** the battery storage device further comprises a docking unit (17) arranged at an end portion of the main body (11) in the first direction (x) or in the second direction (y), and an external battery transporter is positioned by the battery storage device by means of the docking unit (17), such that the battery is transferred from the battery transporter to at least one of the first conveying portion (12) and the second conveying portion (13).

5. The battery storage device according to claim 1, **characterized in that** the first conveying portion (12) and the second conveying portion (13) each comprise a plurality of roller arrays, wherein each of roller arrays comprises a plurality of pivoting rollers arranged in a conveying direction of the conveying portion, the roller array of the first conveying portion (12) has a first surface in contact with the battery, the roller array of the second conveying portion (13) has a second surface in contact with the battery, and the switching unit (14) controls at least one of the first conveying portion (12) and the second conveying portion (13) to ascend or descend, such that the first surface is higher than the second surface or the second surface is higher than the first surface.

6. The battery storage device according to claim 5, **characterized in that** the roller arrays of the first conveying portion (12) and the roller arrays of the second conveying portion (13) are arranged crosswise at the top potion of the main body (11).

7. The battery storage device according to claim 1, **characterized in that** the battery storage device further comprises a charging connection unit (15) arranged on the main body (11), and the charging connection unit (15) fixes the battery onto the main body (11) and charges the battery.

8. The battery storage device according to claim 1, **characterized in that** the battery storage device further comprises a moving portion (18) for moving the main body (11), and the moving portion (18) is lockable.

9. A battery storage and exchange system, **characterized in that** the battery storage and exchange system comprises at least two battery storage devices according to any one of claims 1 to 8, wherein the battery storage devices are adjacently arranged in the first direction (x) or in the second direction (y).

10. The battery storage and exchange system according to claim 9, **characterized in that** any one of the battery storage devices is engaged with a battery transporter in the form of a vehicle by means of a docking unit (17) arranged in the first direction (x), or one of the battery storage devices is provided with a battery transporter in the form of a track rail on one side in the second direction (y).
